# EUROPÄISCHE PATENTSCHRIFT

(11) **EP 3 557 947 B1**
(45) Veröffentlichungstag und Bekanntmachung des Hinweises auf die Patenterteilung: **06.01.2021**
(21) Anmeldenummer: 19155230.6
(22) Anmeldetag: 04.02.2019
(51) Int. Cl.: H02J 1/04, H05B 45/00, H05B 45/50

(54) **STROMVERSORGUNGSEINRICHTUNG SOWIE VERFAHREN ZUM BETREIBEN EINES VON EINEM WANDLER ENERGIEVERSORGTEN ELEKTRISCHEN VERBRAUCHERS**
POWER SUPPLY DEVICE AND METHOD FOR OPERATING AN ELECTRIC CONSUMER SUPPLIED BY A CONVERTER
DISPOSITIF D'ALIMENTATION ÉLECTRIQUE AINSI QUE PROCÉDÉ DE FONCTIONNEMENT D'UN CONSOMMATEUR ÉLECTRIQUE ALIMENTÉ PAR UN CONVERTISSEUR

(30) Priorität: 17.04.2018 DE 102018109043
(43) Veröffentlichungstag der Anmeldung: 23.10.2019
(73) Patentinhaber: Insta GmbH, 58509 Lüdenscheid (DE)
(72) Erfinder: Grosch, Volker, 45549 Sprockhövel (DE); Herzog, Dirk, 58513 Lüdenscheid (DE); Wüller, Stefan, 58553 Halver (DE); Hopp, Christian, 44139 Dortmund (DE)

(56) Entgegenhaltungen:
- US-A1- 2012 176 064
- US-A1- 2017 303 351

## Beschreibung

Die Erfindung betrifft eine Stromversorgungseinrichtung für zumindest einen elektrischen Verbraucher mit zwei über eine physische Schnittstelle in Reihe geschalteten Wandlern, wobei der erste Wandler Teil einer an eine Stromversorgung angeschlossenen Steckkontakteinheit, insbesondere einer Steckdose, und der zweite Wandler Teil des elektrischen Verbrauchers oder Teil einer elektrischen Verbrauchereinheit ist, und wobei der erste Wandler bis zu einer bestimmten Maximalleistung eine konstante Spannung an der Schnittstelle zur Verfügung stellt und von denen der zweite Wandler die von dem ersten Wandler bereitgestellte Spannung in einen zum Betreiben des wenigstens einen elektrischen Verbrauchers benötigten Strom wandelt. Die Erfindung betrifft ferner ein Verfahren zum Betreiben eines von einem Wandler energieversorgten elektrischen Verbrauchers, welcher Wandler über eine physische Schnittstelle in Reihe mit einem ersten Wandler geschaltet ist und seine Energie zum Versorgen des zumindest einen elektrischen Verbrauchers von dem ersten Wandler bezieht, wobei der erste Wandler Teil einer an eine Stromversorgung angeschlossenen Steckkontakteinheit, insbesondere eine Steckdose und der zweite Wandler Teil des elektrischen Verbrauchers oder Teil einer elektrischen Verbrauchereinheit ist.

Zur Stromversorgung von elektrischen Verbrauchern, insbesondere im Bereich der Beleuchtungstechnik werden Topologien mit mehrfacher Wandlung eingesetzt. Typischerweise befindet sich zwischen den beiden Wandlern eine physische Schnittstelle, über die der Eingang des zweiten Wandlers an den Ausgang des ersten Wandlers angeschlossen werden kann. Der diesbezügliche Schnittstellenteil des ersten Wandlers ist in aller Regel eine Steckdose, während der dem zweiten Wandler zugehörige Schnittstellenteil ein entsprechend komplementär ausgeführter Stecker ist. Der erste Wandler stellt eine Spannung innerhalb eines definierten Leistungsbereiches zur Verfügung. Der zweite Wandler wandelt die bereitgestellte Spannung in einen Strom zum Betreiben des zumindest einen an diesen angeschlossenen elektrischen Verbrauchers. Der zweite Wandler kann auch mehrere Ströme bereitstellen, wenn von diesem mehrere elektrische Verbraucher gespeist werden. Ein typisches Anwendungsfeld für eine derartige Stromversorgung ist die Stromversorgung von trägheitsfreien Leuchtmitteln, beispielsweise LEDs oder LED-Arrays.

Um einen störfreien Betrieb und eine Beschädigung an der Stromversorgungseinheit beteiligter Komponenten zu vermeiden, darf die von dem zweiten Wandler von dem ersten Wandler abgenommene Leistung nicht größer sein als die Maximalleistung (maximale Ausgangsleistung) des ersten Wandlers. Die maximale Leistungsabnahme durch den zweiten Wandler ist maßgeblich abhängig von der zum Betrieb des zumindest einen elektrischen Verbrauchers benötigten Leistung. Aus diesem Grunde müssen der erste Wandler und der zweite Wandler aufeinander abgestimmt sein, was bei fest verdrahteten Systemen, die durch einen Fachmann verbaut und miteinander elektrisch verbunden werden, ohne Weiteres möglich ist.

Bei Konfigurationen, bei denen beispielsweise ein wechselnder Anschluss eines zweiten Wandlers an den ersten Wandler möglich ist, was etwa bei einem Austausch einer ersten Beleuchtungseinrichtung durch eine zweite leistungsstärkere der Fall sein kann, kann dieses, gerade wenn ein solcher Wechsel nicht durch Fachpersonal erfolgt, dazu führen, dass die von dem zweiten Wandler angenommene Leistung die maximale Ausgangsleistung des ersten Wandlers überschreitet. Dieses führt zu einem nicht störfreien Betrieb. Mitunter kann eine solche Überlastsituation für den ersten Wandler einem Nutzer durch Blinken des Leuchtmittels angezeigt werden. Da derartige erste Wandler typischerweise fest installiert sind, könnte man bei der Planung diese entsprechend leistungsstark auslegen, um vorausschauend eine solche Situation zu vermeiden. Dieses führt jedoch dazu, dass dann die ersten Wandler so leistungsfähig ausgelegt werden müssten, wie dieses in aller Regel nicht benötigt wird. Die Kosten eines solchen Wandlers steigen mit der Zunahme seiner Leistungsfähigkeit.

Aus US 2012/0176064 A1 ist eine Stromversorgungseinrichtung zum Betrieb einer LED-Anordnung bekannt. Diese verfügt über einen Leistungsabgabebegrenzer, damit eine Überlastsituation bei der Leistungsabgabe nicht erzeugt wird. Die Leistungsabgabe wird durch eine manuelle Einstellung vorgegeben. Diese Stromversorgungseinrichtung ist gattungsfremd, da diese nicht zwei über eine physische Schnittstelle in Reihe geschaltete Wandler aufweist. Das Netzteil bei dieser Stromversorgungseinrichtung ist direkt an die Netzspannung angeschlosser.

Das Dokument US 2017/303351 A1 bildet einen weiteren Stand der Technik.

Somit besteht der Wunsch eine durch Mehrfachwandlung bereitgestellte Stromversorgungseinrichtung sowie ein Verfahren zum Betrieb einer solchen zur Verfügung zu haben, bei der gefahrlos an den ersten Wandler mit einer maximalen Ausgangsleistung auch ein zweiter Wandler angeschlossen und betrieben werden kann, dessen maximale Leistungsabnahme von dem ersten Wandler auch größer sein kann als die maximale Ausgangsleistung des ersten Wandlers, und zwar ohne, dass die Funktionalität beeinträchtigt ist.

Diese Aufgabe wird erfindungsgemäß zum Einen durch eine Stromversorgungseinrichtung der eingangs genannten Art dadurch gelöst, dass der zweite Wandler einen Leistungsabnahmebegrenzer zum Begrenzen der von dem ersten Wandler abgenommenen Leistung sowie eine Steuerung zum Steuern des Leistungsabnahmebegrenzers zum Reduzieren seiner Leistungsabnahme, wenn die von dem zweiten Wandler maximal benötigte Leistung größer als die Maximalleistung des ersten Wandlers ist, aufweist und dass die Schnittstelle eine Datenleitung zur Übertragung von Daten von dem ersten Wandler an den zweiten Wandler umfasst, bei welchen empfangenen Daten es sich zumindest um einen Lastindex als Angabe zur Maximalleistung des ersten Wandlers handelt, und dass die Steuerung Zugriff auf diesen Lastindex hat und der zweite Wandler ein Speicherglied zum Ablegen von von dem ersten Wandler bertragenen Daten umfasst, in welchem Speicherglied der vor dem ersten Wandler empfangene Lastindex abgelegt ist.

Die verfahrensbezogene Aufgabe wird durch ein Verfahren der eingangs genannten Art gelöst, bei der die Leistungsabnahme des mit dem ersten Wandler in Reihe geschalteten zweiten Wandlers reduziert wird, wenn die von dem zweiten Wandler benötigte Leistung größer ist oder größer wird als die Maximalleistung des ersten Wandlers und zu diesem Zweck der erste Wandler einen Lastindex als Angabe zu seiner Maximalleistung an den zweiten Wandler überträgt, in dem zweiten Wandler gespeichert wird, auf welchen Lastindex die Steuerung des zweiten Wandlers zum Vergleichen der von dem ersten Wandler abgenommenen Leistung mit der durch den Lastindex definierten zulässigen maximalen Leistungsabnahme zurückgreift.

Bei dieser Stromversorgungseinrichtung - gleiches gilt auch für das beanspruchte Verfahren - kann die Abnahme der von dem zweiten Wandler von dem ersten Wandler abgenommenen Leistung reduziert werden. Dieses erfolgt in Abhängigkeit von der vorgegebenen Maximalleistung des ersten Wandlers und je nach Auslegung der Stromversorgungseinrichtung der maximal benötigten Leistung des zweiten Wandlers. Ist die maximal benötigte Leistung des zweiten Wandlers größer als die von dem ersten Wandler bereitgestellte Maximalleistung, wird die maximale Leistungsabnahme durch den zweiten Wandler vom ersten Wandler begrenzt. Bei elektrischen Verbrauchern, die mit unterschiedlichen Leistungen betrieben werden können, wie dieses bei Leuchtmitteln durch Dimmen der Fall ist, kann die Begrenzung der maximalen Leistungsabnahme durch den zweiten Wandler dadurch erreicht werden, dass bei Erreichen der Maximalleistung des ersten Wandlers eine weitere Leistungssteigerung des oder der betriebenen elektrischen Verbraucher nicht mehr möglich ist. Bei dieser Verfahrensausgestaltung wird die maximale Leistungsabnahme durch den zweiten Wandler begrenzt, während vor Erreichen der maximal zugelassenen Leistungsabnahme eine Begrenzung der Leistungsabnahme durch die Steuerung des zweiten Wandlers unbeeinflusst bleibt. In einer anderen Ausgestaltung wird die Leistungsabnahme des zweiten Wandlers in jedem Betriebszustand proportional zu dem Verhältnis zwischen der Maximalleistung des ersten Wandlers und der maximalen Leistungsabnahme durch den zweiten Wandler bei jedem Betriebszustand reduziert.

Genutzt werden für diese Steuerung, die in einem das oder die elektrische Verbraucher speisenden Wandler - dem zweiten Wandler gemäß der vorstehend verwendeten Terminologie - ohnehin vorhandenen Komponenten, wie etwa ein Mikrocontroller, durch den die Steuerung bereitgestellt ist. Ein solcher Wandler verfügt ebenfalls über ein Speicherglied, in dem von dem ersten Wandler übertragene Daten, wie Parametrierdaten oder Dimmdaten abgelegt sind. Zum Zwecke der Leistungsbegrenzung verfügt dieser Wandler über einen Leistungsabnahmebegrenzer. Da die Leistungsabnahme abhängig ist von der von dem oder den elektrischen Verbrauchern, beispielsweise dem oder den Leuchtmitteln benötigten Leistung, kann ein solcher Leistungsabnahmebegrenzer durch die in einem solchen Wandler ohnehin vorhandenen Mittel zur Leistungsabgabebegrenzung realisiert sein.

Über eine zwischen dem ersten Wandler und dem zweiten Wandler vorhandene Datenleitung wird ein Lastindex als Angabe zur Maximalleistung des ersten Wandlers an den zweiten Wandler übermittelt und in dem Speicherglied abgelegt. Die Steuerung des zweiten Wandlers hat Zugriff auf diesen Lastindex. Der Lastindex kann isochron übertragen werden. Eine isochrone Übertragung ist bei hot-plug-fähigen System vorteilhaft, da sie ohne bidirektionale Kommunikation jedem neu angeschlossenen Verbraucher die Information über den Lastindex zeitnah zur Verfügung stellt. Ebenfalls ist es möglich, den Lastindex des ersten Wandlers beim erstmaligen Anschließen bzw. bei der erstmaligen Inbetriebnahme des zweiten Wandlers an den bzw. mit dem ersten Wandler zu senden, der dann in dem Speicherglied des zweiten Wandlers abgelegt wird. Dieses ist grundsätzlich ausreichend, da die Maximalleistung des ersten Wandlers sich nicht ändert. Wird die aus dem oder den elektrischen Verbrauchern mit dem zweiten Wandler gebildete Einheit von einem ersten Wandler getrennt und an einen anderen ersten Wandler angeschlossen, wird wiederum dessen Lastindex übertragen und in das Speicherglied des zweiten Wandlers geschrieben.

Die typischerweise durch den ohnehin vorhandenen Mikroprozessor realisierte Steuerung des zweiten Wandlers wertet den von dem ersten Wandler empfangenen Lastindex in Bezug auf die Maximalleistung der an den zweiten Wandler angeschlossenen elektrischen Verbraucher aus, um eine Situation, bei der die Leistungsabnahme des zweiten Wandlers von dem ersten Wandler größer ist als dessen Maximalleistung, nicht eintreten zu lassen.

Gemäß einer Weiterbildung wird für den zweiten Wandler ebenfalls ein Lastindex bereitgestellt. Dieser ist in derselben Art und Weise ermittelt worden wie der Lastindex des ersten Wandlers, sodass diese unmittelbar miteinander verglichen werden können. Diese Lastindizes können beispielsweise unmittelbar durch Gewichtung der maximalen Ausgangs- bzw. Eingangsleistung des ersten bzw. zweiten Wandlers ermittelt werden. Die Verwendung von Lastindizes vereinfacht den Auswertealgorithmus im zweiten Wandler, da dann nur diese beiden Werte miteinander verglichen werden müssen. Ist der Lastindex des zweiten Wandlers größer oder gleich dem Lastindex des ersten Wandlers, kann die Leistungsabnahmebegrenzung des zweiten Wandlers inaktiv bleiben, da in einem solchen Fall eine Überlastsituation für den ersten Wandler nicht eintreten kann. Ist hingegen der Lastindex des zweiten Wandlers größer als der Lastindex des ersten Wandlers und somit die maximale Leistungsabnahme des zweiten Wandlers größer als die maximale Ausgangsleistung des ersten Wandlers, wird die Leistungsabnahme des zweiten Wandlers entsprechend reduziert, und zwar soweit, dass die Leistungsabnahme des zweiten Wandlers die Maximalleistung des ersten Wandlers nicht mehr überschreitet. Liegt für den zweiten Wandler ein Lastindex vor, wird dieser in Abhängigkeit von seinem eigenen Lastindex betrieben bzw. seine Ausgangsleistung entsprechend dem eigenen Lastindex begrenzt. Ist der Lastindex des ersten Wandlers hingegen kleiner als derjenige des zweiten Wandlers, kann gemäß einer Verfahrensausgestaltung der Leistungsindex des zweiten Wandlers durch denjenigen des ersten Wandlers ersetzt werden, sodass fortan ein Betrieb des zweiten Wandlers mit dem Lastindex des ersten Wandlers erfolgt. Hierdurch ist wirksam eine Überlastsituation für den ersten Wandler vermieden. Wird bei einer solchen Ausgestaltung der zweite Wandler an einen anderen ersten Wandler angeschlossen, stellt sich zunächst in dem zweiten Wandler wieder der eigene Lastindex ein, sodass, sollte der andere erste Wandler einen größeren Lastindex aufweisen, ein Betrieb des zweiten Wandlers möglicherweise ohne Leistungsabnahmebegrenzung erfolgen kann.

Bei dem Konzept, bei dem der erste Wandler an den zweiten Wandler seinen Lastindex übermittelt, stehen der erste Wandler und der zweite Wandler in einem Master-Slave-Verhältnis zueinander, wobei der erste Wandler der Master und der zweiten Wandler der Slave ist.

Bei einer solchen Stromversorgungseinrichtung kann von einem Benutzer ohne Weiteres der zweite Wandler von dem ersten Wandler getrennt und an einen anderen ersten Wandler angeschlossen werden, ohne dessen maximale Ausgangsleistung zu kennen oder überprüfen zu müssen, ob der umzusetzende zweite Wandler an den anderen ersten Wandler angeschlossen werden kann. Somit können auf diese Weise auch unterschiedliche Systemteile problemlos miteinander kombiniert werden, d.h.: Der oder die zweiten Wandler müssen bezüglich ihrer maximalen Leistungsaufnahme nicht an bestimmte erste Wandler angepasst sein. Folglich kann eine Änderung der Zusammenstellung der Stromversorgungseinrichtung oder eine Änderung bezüglich der elektrischen Verbraucher problemlos von Jedermann vorgenommen werden.

Nachfolgend ist die Erfindung anhand eines Ausführungsbeispiels unter Bezugnahme auf die beigefügten Figuren beschrieben:
- **Fig. 1:**: Eine schematisierte Darstellung einer Stromversorgungseinrichtung für einen elektrischen Verbraucher unter Verwendung einer Mehrfachwandlung in einem ersten Betriebszustand und
- **Fig. 2:**: die Darstellung der Stromversorgungseinrichtung für einen elektrischen Verbraucher unter Verwendung einer Mehrfachwandlung in einem zweiten Betriebszustand.

Eine Stromversorgungseinrichtung 1 ist in nicht näher dargestellter Art und Weise an ein Stromnetz mittels eines Stromkabels 2 angeschlossen. Die Stromversorgungseinrichtung 1 umfasst einen ersten Wandler 3, der auch als Eingangswandler angesprochen werden kann, und einen zweiten Wandler 4, der auch als Ausgangswandler angesprochen werden kann. Der erste Wandler 3 vermag eine maximale Ausgangsleistung bereitzustellen, die mit einem Lastindex L₁ beschrieben werden kann. Der erste Wandler 3 verfügt ebenfalls über ein Kommunikationsmodul 5, mit dem über eine Datenleitung 6 Daten an den zweiten Wandler 4 übertragen werden können. Die Energiequelle 7 des ersten Wandlers 3 ist über eine zweiadrige Energieleitung 8 an einen Energiewandler 9 des zweiten Wandlers 4 angeschlossen. Von dem Kommunikationsmodul 5 werden Parametrierdaten, Dimmdaten und dergleichen an den zweiten Wandler 4 übertragen. Diese Daten werden in dem zweiten Wandler 4 in einem Speicherglied 10 abgelegt. An den Energiewandler 9 des zweiten Wandlers 4 ist eine aus mehreren trägheitsfreien Leuchtmitteln gebildete Beleuchtungseinrichtung als Verbraucher 11 angeschlossen. Bei diesen handelt es sich bei dem dargestellten Ausführungsbeispiel um LEDs. In die Energieleitung 8 und die Datenleitung 6 ist eine in der Figur nicht dargestellte physische Schnittstelle eingebaut. Diese ist bei dem dargestellten Ausführungsbeispiel als Steckdose und Stecker vorgesehen. Die Steckdose ist dem ersten Wandler 3 zugehörig, während der Stecker dem zweiten Wandler 4 zugehörig ist. Die Steckverbindung ist dreipolig ausgeführt, wobei zwei Pole für die Energieübertragung und ein Pol für die Datenübertragung dienen.

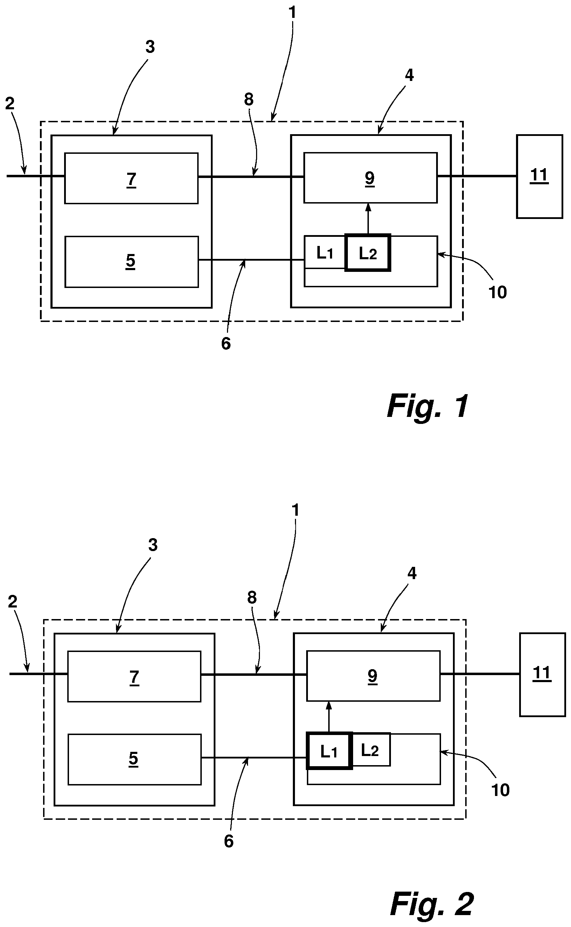

In Abhängigkeit von der maximalen Leistung der Beleuchtungseinrichtung und der für den eigenen Betrieb benötigten Leistung des zweiten Wandlers 4 ist dem zweiten Wandler 4 ein Lastindex L₂ zugeordnet. Dieser Lastindex L₂ ist ebenfalls in dem Speicherglied 10 abgelegt. Neben den anderen vorgenannten Daten wird von dem ersten Wandler 3 beim erstmaligen Anschließen des zweiten Wandlers 4 an den ersten Wandler 3 und einer Inbetriebnahme des zweiten Wandlers 4 der Lastindex L₁ über die Datenleitung 6 an den zweiten Wandler 4 übertragen und in dem Speicherglied 10 abgelegt. Die in dem zweiten Wandler 4 vorhandene Steuerung umfasst einen Mikrocontroller (nicht dargestellt). Dieser vergleicht die beiden Lastindizes L₁, L₂. Ist der Lastindex L₂ nicht größer als der Lastindex L₁, kann in der beschriebenen Konstellation für den ersten Wandler 3 keine Überlastsituation eintreten. Somit wird der zweite Wandler 4 mit seinem Lastindex L₂ betrieben. In Figur 1 ist dieses durch die Hervorhebung des Lastindex L₂ kenntlich gemacht.

Wenn hingegen der Lastindex L₂ des zweiten Wandlers 4 größer ist als der Lastindex L₁, wird der Energiewandler 9 des zweiten Wandlers 4 mit einem veränderten Lastindex betrieben, durch den verhindert ist, dass die von dem zweiten Wandler 4 von dem ersten Wandler 3 abgenommene Leistung größer ist als die maximale Ausgangsleistung des ersten Wandlers 3. Bei dem dargestellten Ausführungsbeispiel wird der Energiewandler 9 des zweiten Wandlers 4 bei einer solchen Situation mit dem Lastindex L₁ betrieben, wie dieses in Figur 2 durch die Hervorhebung des Lastindex L₁ kenntlich gemacht ist. Auf diese Weise ist wirksam verhindert, dass, obwohl die maximale Abnahmeleistung des zweiten Wandlers 4 größer ist als die Maximalleistung des ersten Wandlers 3, für den ersten Wandler 3 keine Überlastsituation eintreten kann.

Aus der Beschreibung der Erfindung wird deutlich, dass die die Daten gebende Baugruppe im ersten Wandler 3 und die die Daten empfangene Baugruppe im zweiten Wandler 4 zur Steuerung/Dimmung ohnehin vorhanden sein müssen, sodass der beschriebene Zusatznutzen der Leistungsabnahmebegrenzung frei von zusätzlichen Hardwarekosten erreicht wird.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung umzusetzen, ohne dass diese im Rahmen dieser Ausführungen näher erläutert werden müssten.

### Bezugszeichenliste

- 1: Stromversorgungseinrichtung
- 2: Stromkabel
- 3: Erster Wandler
- 4: Zweiter Wandler
- 5: Kommunikationsmodul
- 6: Datenleitung
- 7: Energiequelle
- 8: Energieleitung
- 9: Energiewandler
- 10: Speicherglied
- 11: Verbraucher

## Patentansprüche

1. Stromversorgungseinrichtung für zum indest einen elektrischen Verbraucher (11) mit zwei über eine physische Schnittstelle in Reihe geschalteten Wandlern (3, 4), wobei der erste Wandler (3) Teil einer an eine Stromversorgung angeschlossenen Steckkontakteinheit, insbesondere einer Steckdose, und der zweite Wandler (4) Teil des elektrischen Verbrauchers (11) oder Teil einer elektrischen Verbrauchereinheit ist, und wobei der erste Wandler (3) bis zu einer bestimmten Maximalleistung eine konstante Spannung an der Schnittstelle zur Verfügung stellt und von denen der zweite Wandler (4) die von dem ersten Wandler (3) bereitgestellte Spannung in einen zum Betreiben des wenigstens einen elektrischen Verbrauchers (11) benötigten Strom wandelt, **dadurch gekennzeichnet, dass** der zweite Wandler (4) einen Leistungsabnahmebegrenzer zum Begrenzen der von dem ersten Wandler (3) abgenommenen Leistung sowie eine Steuerung zum Steuern des Leistungsabnahmebegrenzers zum Reduzieren seiner Leistungsabnahme, wenn die von dem zweiten Wandler (4) maximal benötigte Leistung größer als die Maximalleistung des ersten Wandlers (3) ist, aufweist und dass die Schnittstelle eine Datenleitung (6) zur Übertragung von Daten von dem ersten Wandler (3) an den zweiten Wandler (4) umfasst, bei welchen übertragenen Daten es sich zumindest um einen Lastindex (L₁) als Angabe zur Maximalleistung des ersten Wandlers (3) handelt, und dass die Steuerung Zugriff auf diesen Lastindex (L₁) hat und der zweite Wandler (4) ein Speicherglied (10) zum Ablegen von von dem ersten Wandler (3) übertragenen Daten umfasst, in welchem Speicherglied (10) der vor dem ersten Wandler (3) empfangene Lastindex (L₁) abgelegt ist.

2. Stromversorgungseinrichtung nach Anspruch 1, **dadurch gekennzeichnet, dass** mit dem Leistungsabnahmebegrenzer des zweiten Wandlers (4) seine maximale Leistungsabgabe begrenzbar ist.

3. Stromversorgungseinrichtung nach einem der Ansprüche 1 oder 2, **dadurch gekennzeichnet, dass** der zumindest eine elektrische Verbraucher (11) ein oder mehrere, trägheitsfreie Leuchtmittel, etwa LEDs, oder ein aus solchen Leuchtmitteln gebildetes Array ist.

4. Verfahren zum Betreiben eines von einem Wandler (4) energieversorgten elektrischen Verbrauchers (11), welcher Wandler (4) über eine physische Schnittstelle in Reihe mit einem ersten Wandler (3) geschaltet ist und seine Energie zum Versorgen des zumindest einen elektrischen Verbrauchers (11) von dem ersten Wandler (3) bezieht, wobei der erste Wandler (3) Teil einer an eine Stromversorgung angeschlossenen Steckkontakteinheit, insbesondere eine Steckdose und der zweite Wandler (4) Teil des elektrischen Verbrauchers (11) oder Teil einer elektrischen Verbrauchereinheit ist, **dadurch gekennzeichnet, dass** die Leistungsabnahme des mit dem ersten Wandler (3) in Reihe geschalteten zweiten Wandlers (4) reduziert wird, wenn die von dem zweiten Wandler (4) benötigte Leistung größer ist oder größer wird als die Maximalleistung des ersten Wandlers (3) und zu diesem Zweck der erste Wandler (3) einen Lastindex (L₁) als Angabe zu seiner Maximalleistung an den zweiten Wandler (4) überträgt und in dem zweiten Wandler (4) gespeichert wird, auf welchen Lastindex (L₁) die Steuerung des zweiten Wandlers (4) zum Vergleichen der von dem ersten Wandler (3) abgenommenen Leistung mit der durch den Lastindex (L₁) definierten zulässigen maximalen Leistungsabnahme zurückgreift.

5. Verfahren nach Anspruch 4, **dadurch gekennzeichnet, dass** der Lastindex (L₁) isochron von dem ersten Wandler (3) an den zweiten Wandler (4) übertragen wird.

6. Verfahren nach Anspruch 4, **dadurch gekennzeichnet, dass** der Lastindex (L₁) des ersten Wandlers (3) bei der erstmaligen Inbetriebnahme des an den ersten Wandler (3) angeschlossenen zweiten Wandlers (4) übertragen wird.

7. Verfahren nach einem der Ansprüche 4 bis 6, **dadurch gekennzeichnet, dass** die maximale Leistungsabnahme des zweiten Wandlers (4) durch einen in derselben Art wie derjenige des ersten Wandlers (3) berechneten Lastindex (L₂) begrenzt wird und, wenn dieser Lastindex (L₂) größer ist als der von dem ersten Wandler (3) empfangene Lastindex (L₁) ist, auf eine Größe reduziert wird, die den Lastindex (L₁) des ersten Wandlers nicht überschreitet.

8. Verfahren nach Anspruch 7, **dadurch gekennzeichnet, dass** die maximale Leistungsabnahme des zweiten Wandlers (4) durch einen in derselben Art wie derjenige des ersten Wandlers (3) berechneten Lastindex (L₂) begrenzt wird und, wenn dieser Lastindex (L₂) größer ist als der von dem ersten Wandler (3) empfangene Lastindex (L₁) ist, der Lastindex (L₂) des zweiten Wandlers (4) durch den empfangenen Lastindex (L₁) des ersten Wandlers ersetzt wird.

9. Verfahren nach einem der Ansprüche 7 & bis 8, **dadurch gekennzeichnet, dass** die Lastindizes (L₁, L₂) durch Gewichtung der maximalen Ausgangs- bzw. Eingangsleistung des ersten Wandlers (3) und des zweiten Wandlers (4) ermittelt werden.

## Claims

1. Power supply unit for at least one electrical consumer (11) with two converters (3, 4) connected in series via a physical interface, the first converter (3) being part of a plug-in contact unit, in particular a socket, connected to a power supply, and the second converter (4) being part of the electrical consumer (11) or part of an electrical consumer unit, and wherein the first converter (3) provides a constant voltage at the interface up to a certain maximum power and of which the second converter (4) converts the voltage provided by the first converter (3) into a current required to operate the at least one electrical consumer (11), **characterized by the fact** that the second converter (4) comprises a power output limiter for limiting the power consumed by the first converter (3) and a control for controlling the power output limiter to reduce its power output when the maximum power required by the second converter (4) is greater than the maximum power of the first converter (3), and that the interface comprises a data line (6) for transmitting data from the first converter (3) to the second converter (4), which transmitted data are at least a load index (L₁) as an indication of the maximum power of the first converter (3), and that the control has access to this load index (L₁) and the second converter (4) comprises a memory element (10) for storing the data transmitted by the first converter (3), in which memory element (10) the load index (L₁) received before the first converter (3) is stored.

2. Power supply unit in accordance with Claim 1, **characterized by the fact** that by means of the power output limiter of the second converter (4) its maximum power output can be limited.

3. Power supply unit in accordance with any of Claims 1 or 2, **characterized by the fact** that the at least one electrical consumer (11) is one or several inertia-free lamps, possibly LED, or an array of such lamps.

4. Method for operating an electrical consumer (11) supplied with energy by a converter (4), which converter (4) is connected in series with a first converter (3) via a physical interface and draws ist energy for supplying the at least one electrical consumer (11) from the first converter (3), the first converter (3) being part of a plug contact unit, in particular a socket, connected to a power supply and the second converter (4) being part of the electrical consumer (11) or part of an electrical load, **characterized by the fact** that the power output of the second converter (4) connected in series with the first converter (3) is reduced if the power required by the second converter (4) is greater or becomes greater than the maximum power of the first converter (3) and for this purpose the first converter (3) transmits a load index (L₁) to the second converter (4) as an indication of its maximum power, and it is stored in the second converter (4), which load index (L₁) is used by the control of the second converter (4) to compare the power consumed by the first converter (3) with the maximum permissible power output defined by the load index (L₁).

5. Method in accordance with Claim 4, **characterized by the fact** that the load index (L₁) is transmitted isochronously from the first converter (3) to the second converter (4).

6. Method in accordance with Claim 4, **characterized by the fact** that the load index (L₁) of the first converter (3) is transmitted during commissioning of the second converter (4) connected to the first converter (3).

7. Method in accordance with any of Claims 4 to 6, **characterized by the fact** that the maximum power output of the second converter (4) is limited by a load index (L₂) calculated in the same way as the load index of the first converter (3) and if this load index (L₂) is larger than the load index (L₁) received by the first converter (3), it is reduced to a size not exceeding the size of the load index (L₁) of the first converter.

8. Method in accordance with Claim 7, **characterized by the fact** that the maximum power output of the second converter (4) is limited by a load index (L₂) calculated in the same way as the load index of the first converter (3) and if this load index (L₂) is larger than the load index (L₁) received by the first converter (3), the load index (L₂) of the second converter (4) is replaced by the load index (L₁) received by the first converter.

9. Method in accordance with any of Claims 7 to 8, **characterized by the fact** that the load indices (L₁, L₂) are determined by weighting the maximum output or input power of the first converter (3) and the second converter (4).

## Revendications

1. Dispositif d'alimentation en courant pour au moins un consommateur électrique (11) avec deux convertisseurs (3, 4) connectés en série par une interface physique, le premier convertisseur (3) faisant partie d'une unité de contact à fiche, en particulier une prise, connectée à une alimentation électrique et le deuxième convertisseur (4) faisant partie du consommateur électrique (11) ou d'une unité de consommateurs électrique, et dans lequel le premier convertisseur (3) fournit une tension constante à l'interface jusqu'à une certaine puissance maximale et dont le deuxième convertisseur (4) convertit la tension fournie par le premier convertisseur (3) en un courant nécessaire au fonctionnement du au moins un consommateur électrique (11), **caractérisé en ce que** le deuxième convertisseur (4) comprend un limiteur de puissance appelée pour limiter la puissance appelée par le premier convertisseur (3) et une commande pour commander le limiteur de puissance appelée afin de réduire sa puissance appelée lorsque la puissance maximale requise par le deuxième convertisseur (4) est supérieure à la puissance maximale du premier convertisseur (3), et **en ce que** l'interface comprend une ligne de données (6) pour transmettre des données du premier convertisseur (3) au second convertisseur (4), lesquelles données transmises sont au moins un indice de charge (L1) comme indication de la puissance maximale du premier convertisseur (3), et **en ce que** la commande a accès à cet indice de charge (L1), et le deuxième convertisseur (4) comprend un élément de mémoire (10) pour le stockage des données transmises par le premier convertisseur (3), dans lequel élément de mémoire (10) est stocké l'indice de charge (L1) reçu avant le premier convertisseur (3).

2. Dispositif d'alimentation en courant selon la revendication 1, **caractérisé en ce que** avec le limiteur de puissance appelée du deuxième convertisseur (4) sa puissance de sortie maximale peut être limitée.

3. Dispositif d'alimentation en courant selon l'une des revendications 1 ou 2, **caractérisé en ce que** l'au moins un consommateur électrique (11) est une ou plusieures lampes (inertie seule), par exemple LED, ou un réseau de telles lampes.

4. Procédé pour faire fonctionner un consommateur électrique (11) alimenté par un convertisseur (4), le convertisseur (4) est connecté en série avec un premier convertisseur (3) par le biais d'une interface physique et tire son énergie pour alimenter l'au moins un consommateur électrique (11) du premier convertisseur (3), le premier convertisseur (3) faisant partie d'une unité de contact à fiche, en particulier une prise, connectée à une alimentation électrique et le deuxième convertisseur (4) faisant partie du consommateur électrique (11) ou partie d'une unité de consommateurs électrique, **caractérisé en ce que** la puissance appelée du deuxième convertisseur (4) connecté en série avec le premier convertisseur (3) est réduite, si la puissance requise par le deuxième convertisseur (4) est supérieure ou devient supérieure à la puissance maximale du premier convertisseur (3), et à cet effet le premier convertisseur (3) transmet un indice de charge (L₁) au deuxième convertisseur (4) comme indication de sa puissance maximale et il est mémorisé dans le deuxième convertisseur (4), à quel indice de charge (L₁) revient la commande du deuxième convertisseur (4) pour comparer la puissance appelée par le premier convertisseur (3) avec la puissance appelée maximale autorisée définie par l'indice de charge.

5. Procédé selon la revendication 4, **caractérisé en ce que** l'indice de charge (L₁) est transmis de façon isochrone du premier convertisseur (3) au deuxième convertisseur (4).

6. Procédé selon la revendication 4, **caractérisé en ce que** l'indice de charge (L₁) du premier convertisseur (3) est transmis lors de la mise en service initiale du deuxième convertisseur (4) connecté au premier convertisseur (3).

7. Procédé selon l'une des revendications 4 à 6, **caractérisé en ce que** la puissance maximale appelée du deuxième convertisseur (4) est limitée par un indice de charge (L₂) calculé de la même manière que celui du premier convertisseur (3) et, si cet indice de charge (L₂) est supérieur à l'indice de charge (L₁) reçu par le premier convertisseur (3), il est réduit à une valeur ne dépassant pas l'indice de charge (L₁) du premier convertisseur.

8. Procédé selon la revendication 7, **caractérisé en ce que** la puissance maximale appelée du deuxième convertisseur (4) est limitée par un indice de charge (L₂) calculé de la même manière que celui du premier convertisseur (3) et, si cet indice de charge (L₂) est supérieur à l'indice de charge (L₁) reçu par le premier convertisseur (3), l'indice de charge (L₂) du deuxième convertisseur (4) est remplacé par l'indice de charge (L₁) reçu par le premier convertisseur.

9. Procédé selon l'une des revendications 7 à 8, **caractérisé en ce que** les indices de charge (L₁, L₂) sont déterminés par pondération de la puissance de sortie ou d'entrée maximale du premier convertisseur (3) et du deuxième convertisseur (4).
